# EUROPEAN PATENT APPLICATION

(11) **EP 4 369 284 A1**
(43) Date of publication of application: **15.05.2024**
(21) Application number: 22206580.7
(22) Date of filing: 10.11.2022
(51) Int. Cl.: G06T 5/00, G06T 11/60

(54) **IMAGE ENHANCEMENT USING GENERATIVE MACHINE LEARNING**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL)
(74) Representative: Philips Intellectual Property & Standards

(57) **Abstract**

The invention improves image processing, in particular medical, and/or dental image processing by image enhancement while minimizing risk for altered diagnosis, using a method comprising the following steps: obtaining a digital image of at least a portion of a body of a person, in particular an oral cavity, wherein the digital image comprises at least one disturbed image portion; and generating, based at least in part on the obtained digital image and using a generative machine-learning model, an enhanced digital image in which the at least one disturbed image portion has been replaced by an artificially created image portion.

## Description

### TECHNICAL FIELD OF THE INVENTION

The present invention generally concerns the field of digital image processing, and in particular the computerized processing and analysis of medical images, such as dental and oral scan images.

### BACKGROUND OF THE INVENTION

Digitalization is ubiquitous in today's world and fundamentally changes the way we live and communicate. One application domain of digitalization concerns personal care or health devices. For example, a user may use a smart toothbrush equipped with a camera which produces images of the user's oral cavity while the user is brushing his or her teeth. The smart toothbrush, or a companion app on the user's smartphone, may then indicate to the user whether the brushing exercise is successful or which teeth need more care, which indication can be provided essentially in real-time during the brushing exercise or thereafter. Another example is a smart shaver.

The collected image data also allows additional advantageous uses in the medical, care or personal health domain. For example, the images may be sent to a medical practitioner for remote diagnosis. However, when the images have been produced by a smart toothbrush, for instance, the images may include disturbed image portions caused by vibration, the presence of toothpaste or saliva and/or the presence of the toothbrush or its bristles. Remote diagnosis based on distorted images is costing considerable additional effort for the medical practitioner, and may even lead to inaccurate or, in the worst case, wrong diagnoses.

Efforts have been made in the prior art to alleviate these problems. As an example, WO 20211/75713 A1 discloses a computerized approach of dental feature identification for assessing oral health. The disclosure particularly comprises a computer program and a computer-based system for remotely assessing oral health of a person by obtaining at least one digital image of the person's oral cavity and additional non-image data comprising anamnestic information about the person. The digital images are segmented using statistical image segmentation algorithms to extract visible segments, which are further processed to predict any invisible segments.

However, the results and the efficiency of the methods of the prior art are not yet optimal. There is hence a need for further improvement and refinement. In particular, when assessing oral health, health diagnoses (taken by a human and/or computerized) could be accidentally altered in the process. This ultimately results in error-proneness and could lead to false positive as well as false negative diagnoses, which are detrimental to the patient, the society and the economy. These effects either remain unidentified causing continuous harm or, alternatively, they lead to medical practitioners rejecting any computer-aided image processing that would alter the original image, taking the associated benefits of modern imaging technology away from the concerned patients.

It is therefore a problem underlying the invention to further improve the computerized processing of digital images and thereby overcome the above-mentioned disadvantages of the prior art at least in part.

### SUMMARY OF THE INVENTION

A solution to the problem has now been devised by the subject-matter of the independent claims. Accordingly, an image processing method is provided as defined in claim 1.

The method may comprise obtaining a digital image of at least a portion of a body of a person. The digital image may comprise at least one disturbed image portion. The method may comprise generating, based at least in part on the obtained digital image and using a generative machine-learning model referred to as enhancement model, an enhanced digital image of at least a portion of the body of the person in which the at least one disturbed image portion has been replaced by an artificially created image portion.

The artificially created image portion, preferably each artificially created image portion, may show a healthy portion of the body of the person. The artificially created image portion, preferably each artificially created image portion, may show a portion of the body of the person which has no substantial health problems. The enhancement model may have been trained so that it only adds artificially created image portions which have no substantial health problems.

One non-limiting application of the method is the medical domain, in particular the dental care domain. In this scenario, the method may be a dental image processing method. The portion of the body of the person may be an oral cavity of the person. The at least one disturbed image portion may be caused by vibration and/or the presence of a medical, care or body substance, such as water, fluid, toothpaste or saliva and/or the presence of a medical, care or personal health device, such as a toothbrush.

Disturbed image portions may be of several different kinds. To mention a few examples, they could contain results of vibrations that have occurred when the digital image was taken. In the case of application of oral and dental health, they could contain toothpaste or saliva, for example, as well as other fluids or substances that may be used and employed by a dentist during patient examination and treatment and may hence also be present during the oral scan. The removal of the disturbance and the replacement by an artificially generated image portion (enhancement) may be achieved using a machine learning technique such as a trained machine-learning model. Such models have proven particularly suitable to achieve feasible results. The enhancement of the image facilitates and may improve successive diagnosis steps, irrespective of if these involve a manual diagnosis and a visual perception by a medical practitioner, or if they alternatively or additionally involve further steps of automated data processing and analysis. Using the enhanced images for diagnosis takes less effort for the medical practitioner because the images are more clear and more easily understandable.

If the image enhancement is applied to a healthy body portion depicted in the image, in particular only to healthy portions while leaving any unhealthy portions unaltered, there is a reduced risk that, in turn, diagnoses could be altered which would be detrimental to the diagnosis quality and accuracy. Healthy portions do, for example, not contain gum health problems or dental health problems or other substantial health problems. As a result, by the present invention, the process of successive diagnosing is facilitated, by the enhancing process. At the same time, risks are reduced to add artificial health problems to the image which were not present in the original digital image as well as risks that health problems present in the original digital image are accidentally removed in the enhancement process. The invention thereby provides significant advantages over the prior art. For example, studies have shown that clean images need less human processing time to classify and understand.

It may also be useful to indicate the hidden areas and/or project the prediction on the correct area. For example, a specific color may be applied to these areas. In extreme cases, the health problem predicted to these areas may be added in the enhanced image.

For proper training of the enhancement model, a method of training a machine-learning model is provided, in particular a generative machine-learning model, for generating an enhanced digital image of at least a portion of a body, in particular an oral cavity, of a person. The method may comprise providing a training dataset, and/or training the machine-learning model using the training dataset. The training dataset may comprise a plurality of pairs of digital images. Each pair may comprise a first digital image of at least a portion of a body, in particular an oral cavity, of a person. The first digital image may comprise at least one disturbed image portion, such as at least one disturbed image portion caused by vibration and/or the presence of a medical, care or body substance, such as water, fluid, toothpaste or saliva and/or the presence of a medical, care or personal health device, such as a toothbrush. Each pair may comprise a second digital image of the at least a portion of the body, in particular the oral cavity, of the person in which the at least one disturbed image portion is absent or diminished.

The at least one disturbed image portion in the first digital image of a given pair may correspond to an image portion in the second digital image of the pair which shows a portion of the body, in particular the oral cavity, of the person in which there are no substantial health problems, i.e. health problems that do not influence a diagnose or triaging outcome.

The absence of substantial health problems in the relevant portions in the training data trains the enhancement model in the desired way, that is, the trained model avoids any accidental altering of diagnosis-relevant image content. In this way, both the risks for false negatives as well as false positives in successive (oral) health assessment using the trained model may be significantly reduced.

For diagnosis or further processing, a masked digital image may furthermore be used and/or displayed that will allow to immediately identify the portions that have been altered by the enhancement model. The masked digital image can be used for validating the enhancement process by adding an additional check to prevent mistakes.

In one aspect, the method may comprise segmenting, using a segmentation machine-learning model referred to as segmentation model, the obtained digital image to produce an indication of at least one undisturbed image portion in the obtained digital image. The method may comprise comparing the at least one undisturbed image portion in the obtained digital image with at least one corresponding portion in the generated enhanced digital image to produce a similarity score. Segmenting also the original digital image, as is proposed here, may furthermore allow the computation of a similarity score that allows for verification and validation of the proposed methods, in particular the of the above enhancing method.

Datasets usable for aspects of the present invention may advantageously be enhanced and/or extended, in particular by artificially generated, that is, synthetic data. As an important example, disturbances may be added to clean areas to artificially disturb the image in a certain segment or portion. This data is well-suited to be used as training data. In other words, a training dataset may comprise at least one synthetic digital image in which at least one artificially disturbed image portion has been added to a digital image of at least a portion of a body, in particular an oral cavity, of a person. This approach is very advantageous, since real data comprising both disturbed and corresponding clean image version can be hard to obtain in practice. Efforts can be reduced by using the proposed data set enhancement by synthetic data. A machine-learning model may be employed for the proposed synthetic data generation. Optionally, at least one dental or gum problem, such as tartar, caries, plaque and/or receding gums, may be artificially added to at least one of the synthetic digital images. This increases stability of the model that is eventually trained with the artificially generated data. Preferably, the regions of added health problems and of added disturbances should not overlap. This avoids mal-training of the receiving machine-learning model.

Images may be used and/or displayed in various fashions according to aspects of the present invention. For example, displaying the obtained digital image and the generated enhanced digital image on an electronic display device may take place. Particularly, the display of the enhanced image may be dependent upon a condition if a similarity score reaches or exceeds a predetermined similarity threshold. In this case, it is avoided that a practitioner will be confronted with enhanced imagery which could be misleading if the enhancement algorithm is in an error-prone state.

To further the insight of the diagnosing practitioner into the enhancement process, additionally displayed may be a masked digital image on the electronic display device which indicates the at least one undisturbed image portion in the obtained digital image, that is, image sections altered by the enhancement model.

Strong safeguards may be implemented to avoid mis-diagnoses. For example, displaying the obtained digital image without the generated enhanced digital image on an electronic display device may be implemented if the similarity score is below a predetermined similarity threshold, optionally with a message that the digital image could not be enhanced.

For image enhancement, an exemplary enhancement model may comprise or may be a convolutional neural network (CNN), a deep CNN, a generative adversarial network (GAN) and/or a StyleGAN. The segmentation model may comprise or may be a CNN, a deep CNN, an image segmentation model and/or a U-Net. Suitable similarity scores may be produced by a comparison model which comprises or is a CNN, a deep CNN, a Siamese neural network and/or a deep Siamese neural network. However, these machine-learning implementations are rather exemplary, while any suitable machine-learning model, algorithm or technique may be employed and tuned to the task at hand by the skilled practitioner.

Verifying and/or validating the performance of the machine-learning model may be done particularly using a verification dataset which is distinct from the training dataset. This increases the value of the validation itself and serves as a safeguard to erroneously validate an error-prone model.

The present invention also provides a computer program, or a computer-readable medium storing a computer program. The computer program may comprise instructions which, when the program is executed on a computer and/or in a computer network, cause the computer and/or the computer network to carry out any of the methods disclosed herein. The computer program may run on a computer, in a personal health device, on the edge or in the cloud.

The present invention also provides a machine-learning model data structure. The data structure may embody a machine-learning model, in particular a generative machine-learning model, for generating an enhanced digital image of at least a portion of a body of a person. The model may be trained using any of the methods disclosed herein.

The present invention also provides a training, verification, validation or test dataset for a machine-learning model, in particular for a generative machine-learning model. The dataset may comprise a collection any of the digital images mentioned above, such as the first digital images mentioned above and/or the second digital images mentioned above and/or the synthetic digital images mentioned above and/or the generated enhanced digital images mentioned above and/or the masked digital images mentioned above.

### BRIEF DESCRIPTION OF THE DRAWINGS

The disclosure may be better understood by reference to the following drawings:
Fig. 1: A dental image processing method in accordance with an embodiment of the invention.
Fig. 2A-B: Exemplary digital images with disturbed image portions caused by toothpaste/saliva (Fig. 2A) and vibrations (Fig. 2B) in accordance with embodiments of the invention.
Fig. 3: An exemplary image pair usable as training data in accordance with embodiments of the invention.
Fig. 4: An exemplary image pair with an artificially generated data sample in accordance with embodiments of the invention.
Fig. 5: A schematic overview of a model, training and inference architecture in accordance with embodiments of the invention.
Fig. 6: Exemplary graphical user interfaces of a smartphone application in accordance with embodiments of the invention.

### DETAILED DESCRIPTION OF THE EMBODIMENTS

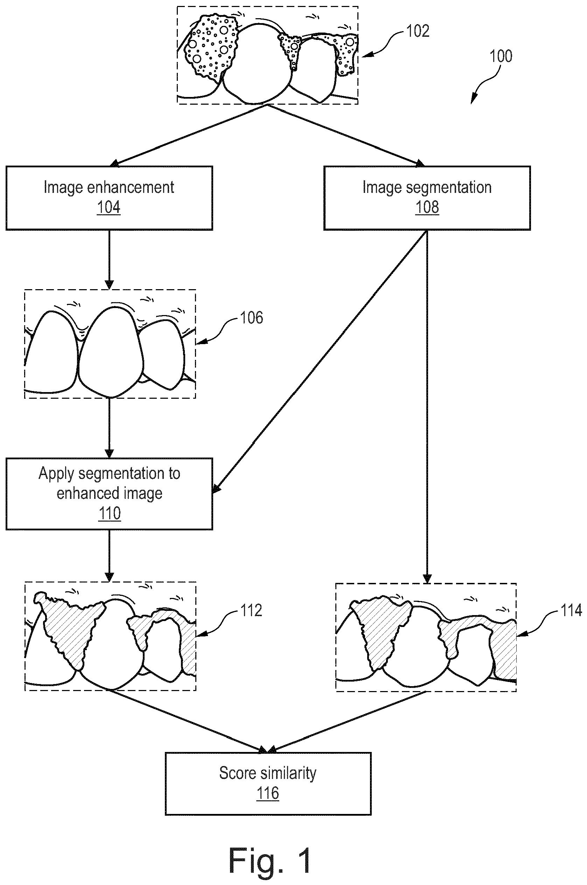

A preferred embodiment of a dental image processing method 100 will now be described with reference to Fig. 1. While the embodiment is explained in the context of dental images, i.e., images which show at least part of an oral cavity of a person, the concepts underlying the present invention are not limited to the dental domain, but may be applied to other kinds of medical images or images in general where a remote diagnose and/or triaging is desired, such as skin diagnose, nail diagnose, images taken by the user of a home medical tester such as a covid test or pregnancy test, or the remote diagnose of an injury based on a user-taken image of the injury.

The input to the method 100 is a digital medical image 102. In the illustrated embodiment, the digital image 102 depicts a portion of the oral cavity of a person. The digital image may have been obtained by a camera device, for example when the person was brushing his or her teeth with a camera-equipped toothbrush, or in a professional setting, e.g., during an inter-oral scan procedure.

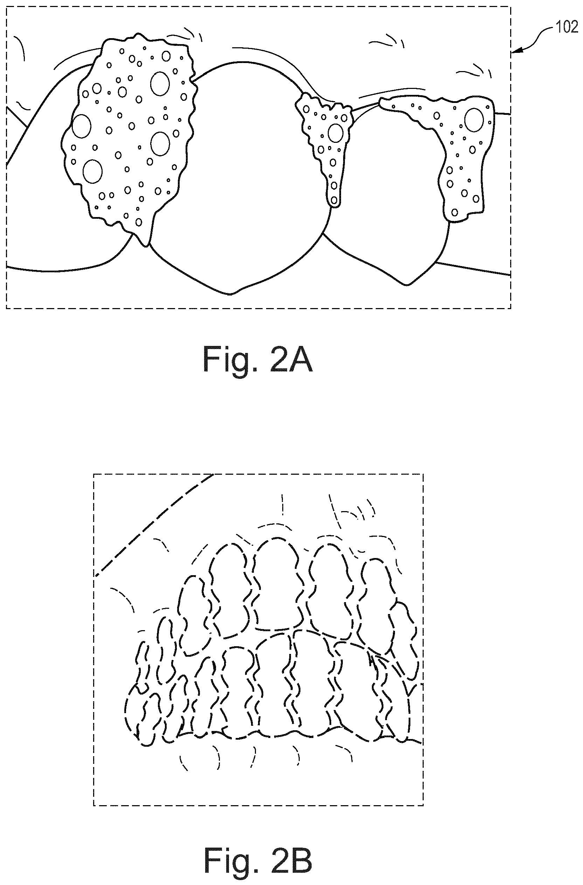

The obtained digital image 102 includes disturbances that are present in disturbed image portions. Fig. 2a shows an enlarged view of the image 102 where it can be seen that parts of the person's teeth are covered with a mixture of toothpaste and saliva. Fig. 2b shows another example of a digital image 102 with disturbances caused by vibrations, for instance caused by an electronic toothbrush.

Returning to Fig. 1, an image enhancement is performed in step 104. The image enhancement produces an enhanced digital image 106. As can be seen in Fig. 1, the disturbed image portions have been replaced by undisturbed portions in the enhanced image 106, thereby producing an overall improved image 106.

In one embodiment, step 104 is performed by a generative machine-learning model, also referred to herein as enhancement model. Various implementations are possible. As one option, the baseline for such a model may be a deep convolutional neural network usable for image-to-image translation, morphing and/or style transfer applications. The inventors have performed tests with good results using Generative Adversarial Network (GAN) designs, such as StyleGAN-like structures, although the principles of the invention are not limited to this particular implementation. In one example implementation, a generator is trying to generate new enhanced images 106 based on the original distorted images 102 as an input, replacing the disturbed parts by (healthy, as all training data has healthy examples in a preferred embodiment) new parts. A discriminator is comparing the newly generated images 106 to the original ground truth image.

Returning to Fig. 1, the image 102 is also the input for an image segmentation in step 108. Steps 104 and 108 may be performed concurrently or in any arbitrary sequence as suitable. The image segmentation step 108 produces a segmented, or masked, image 114 in which the disturbed portions of the input image 102 have been masked.

In one embodiment, step 108 is performed by a segmentation machine-learning model, also referred to herein as segmentation model. The model may be a U-Net, as one non-limiting practical implementation. The segmentation model may have been trained at least in part using synthetically generated data where ground truth data is available, which may lead to good training results. The training data comprises, in one example, segments of two different types, namely clean and enhanced segments.

In one embodiment, the training and test data is split into exclusive subsets for all the models and training because later they are used for validation and should not be influenced by overlapping data while training.

Returning to Fig. 1, in step 110 the image segmentation is applied to the enhanced image 106 to produce a masked enhanced image 112.

In step 116, the masked enhanced image 112 and the masked original image 114 are compared and a similarity score is calculated. The similarity score may be calculated using various techniques, such as a basic comparison, matrix sections comparison, or more advanced machine-learning solutions, such as with a CNN-based deep Siamese network.

The similarity score can be used to validate the results produced by the enhancement model. This ensures that no clean sections, i.e., sections of the input image 102 which depict healthy portions of the person's oral cavity, have been unduly altered. Similarity scores should generally be high or even very high. If not, the enhancement model may have trouble with the provided images and the resulting enhanced image should not be used in isolation by the medical professional for diagnosis, but instead the raw or both images should be used. In these cases, a diagnosis may not be possible on these images. The risk of false positives can be verified based on test datasets and proven to be below typical human error on disturbed images.

As an alternative to using the similarity calculation during inference, the trained segmentation model may also be used during the training of the enhancement model to compare specific sections with the ground truth and penalize the network during training for specific mismatches in the clean areas. In this case, no validation during inference should be performed using the segmentation model because the algorithm has been trained using the corresponding similarity check.

Optionally, a dental problem detection algorithm may be used to detect possible "Dental problem like" features in the generated areas of the enhanced image 106.

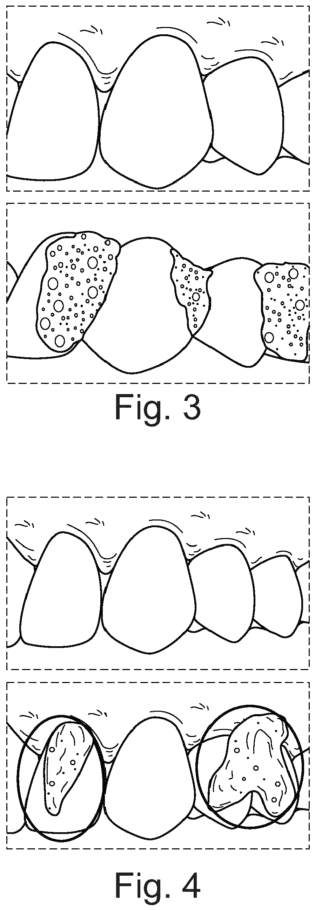

Fig. 3 shows exemplary training image data usable in accordance with embodiments of the invention. In the image in the lower part of Fig. 3, disturbances are present. These disturbances are absent in the image in the upper part of Fig. 3. Together, the two images form an image pair as one dataset of the training data. Such data may be used in the context of the present invention as training data for the training of the enhancement model, using for example any sort of supervised learning method. The training data is unique in certain embodiments of the invention in that the parts of the image which are hidden or partly hidden by corruptions, disturbances or distortions should not contain any dental (or otherwise medical) problems because this could lead to a negative diagnose. The models of a preferred embodiment of the invention are trained with this training data to fill in the corrupted, disturbed, or distorted parts, wherein the replaced image portions cannot have any dental problems as a result of the training data.

Collecting the training data may be performed with specific camera setups where images are taken with and without corruptions, disturbances and/or distortions.

While the models may be trained in various ways, certain embodiments of the invention ensure that both networks (the enhancement model and the segmentation model) do not have overlapping training data to enable the validation function.

The performance of the trained models should enable safe enhancing without influencing the diagnose false positive. False negatives are less critical in scenarios in which the intention is remote diagnose or triaging. Because the model is trained with only valid images where no dental problems are added in the disturbed sections and on top, a comparison between original and enhanced images for validation is made possible. In addition, in case the validation scores low, i.e., chances are the model may have added or removed health problems, so these should not be used for safe diagnoses, the original disturbed image is available for the dental professional, resulting in a very low risk of false positive diagnosis.

Collecting the above-mentioned real-world training data in sufficient amounts may be difficult. Therefore, synthetic training data may be generated. Fig. 4 shows artificially generated data samples in accordance with embodiments of the invention. The figure may illustrate how, for example using machine learning models and techniques, disturbances can be artificially added to image data. In this case, the image in the upper part of Fig. 4 resulted from a real oral scan, whereas the image in the lower part of Fig. 4 is artificially disturbed. As can be seen, disturbances that implement the presence of toothpaste have been added to the image (see the circled areas). This technique is particularly feasible because images taken by Inter Oral Scans (IOS) are widely available and can relatively easily be collected. In addition, information, data and images of typical corruptions, disturbances or distortions are also available and easy to generate. Combining both, e.g., in a random fashion, enables the generation of large amounts of training data.

This generation of the artificially generated image data relies for example on parametric descriptions of the nature of certain types of disturbances (e.g., toothpaste, vibrations). As a result, only one image may be needed (e.g., the upper one in Fig. 4) to start with. This is highly advantageous since real image data of both disturbed and corresponding undisturbed scenarios may be rare and both cumbersome and costly to obtain.

The training data may be generated in a way to prevent the models from generating images that will influence the diagnosis. As described above, in a preferred embodiment, the sections hidden by corruptions, disturbances and/or distortions cannot have any dental problems that could trigger a negative diagnosis. Utilizing (3D) IOS, preferably annotated per teeth and/or sections, can be used to generate the datasets by only adding corruptions, disturbances and/or distortions to "healthy" parts of IOS.

The IOS used as the base images may comprise a mix of real dental IOS. In addition, images taken from dental demonstration models may also be used.

To train the models to leave any dental problems in the non-disturbed areas of the image, certain embodiments may involve the use of images with dental problems in the dataset where these dental problems are visible and not hidden by disturbances.

It is also possible to artificially add known visible dental problems, such as tartar, carries, plaque and/or receding gums in a similar manner as explained above in the context of adding disturbances. Such dental problems affecting the diagnosis should only be added to the non-disturbed areas of the image. Special attention may be required, for example, with difficult classification cases, such as dental fillings that typically have many similarities with toothpaste in images. The lower part of Fig. 4 shows that an artificially created disturbance representing toothpaste may show similarities with filling material.

The locations for the artificially added dental problems may be chosen randomly (similar to the disturbances, as explained above). The dental problems may also be added specifically to common dental problem areas, which may improve algorithm complexity, performance and size. As described above, one objective of certain embodiments of the invention is to train the model such that it will only add and/or transfer healthy medical (oral) image sections to the disturbed areas and leave the non-disturbed sections unaffected.

Additional data augmentation techniques may be employed in certain embodiments of the invention. For example, small adaptions or changes to the images can be made, such as adjusting zoom level, rotation, brightness and/or color changes. In the case of 3D input data, such as 3D IOS, camera angles may also be changed. These techniques may be advantageously used to enlarge the training dataset even further without collecting real life data and while preventing the addition of dental problems in distorted regions of the images.

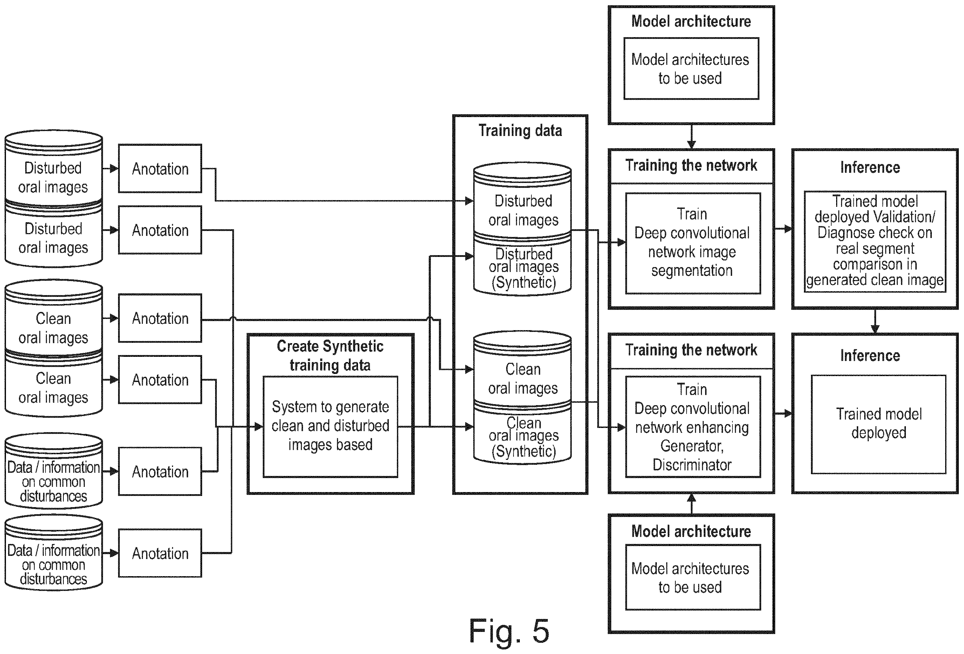

Fig. 5 illustrates a schematic overview of a model architecture in which embodiments of the invention can be implemented.

The principles and various features of embodiments disclosed herein can be implemented locally, remotely, or distributed in, for example, a personal health device, a smartphone, computer, and/or cloud computing environment. Live enhancing is possible, and so an implementation as a preview or at the dental practitioner's diagnostic interface is also possible.

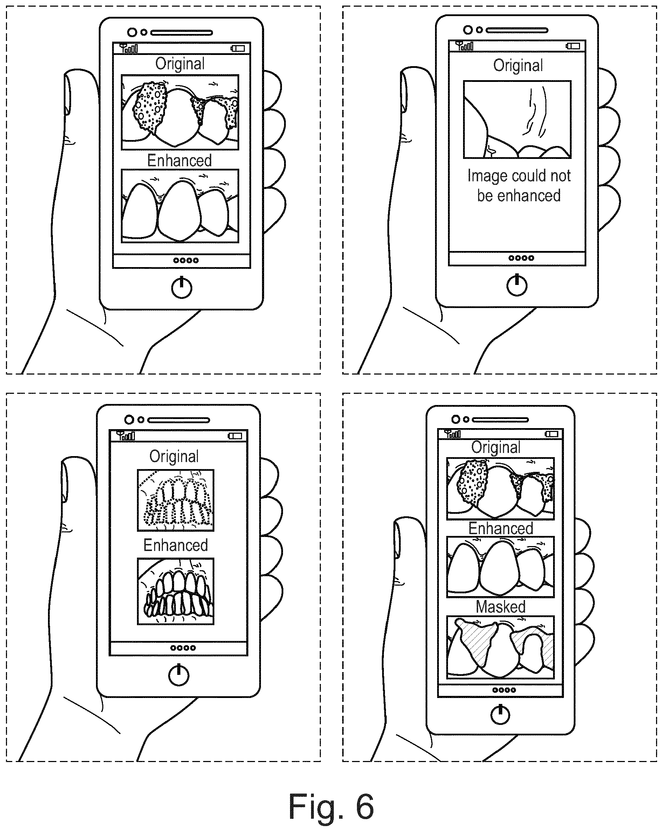

Fig. 6 illustrates exemplary graphical user interfaces of an application for a smartphone or other electronic user device. Enhanced images can be used for diagnoses as described above. By combining the enhanced and the original image (when auto verification passes) in one view (see the upper-left and lower-left images in Fig. 6), the effect of less effort is still achieved while the risk of false diagnosis is even further lowered by also presenting the original image. If the automatic verification as described above fail, only the original image may be presented with a message stating the image could not be enhanced (see the upper-right image in Fig. 6). It may also be feasible to present all three image versions (original, enhanced and masked; see the lower-right image in Fig. 6).

Although some aspects have been described in the context of a device, it is clear that these aspects also represent a description of the corresponding process, where a block or device corresponds to a process step or a function of a process step. Similarly, aspects described in the context of a process step also constitute a description of a corresponding block or element or feature of a corresponding device.

Embodiments of the invention may be implemented in a computer system. The computer system may be a local computing device (e.g., personal computer, laptop, tablet computer, or cell phone) having one or more processors and one or more storage devices, or may be a distributed computing system (e.g., a cloud computing system having one or more processors or one or more storage devices distributed at various locations, for example, at a local client and/or one or more remote server farms and/or data centers). The computer system may comprise any circuitry or combination of circuitry. In one embodiment, the computer system may comprise one or more processors, which may be of any type. As used herein, processor may mean any type of computing circuit, such as, but not limited to, a microprocessor, a microcontroller, a complex instruction set microprocessor (CISC), a reduced instruction set microprocessor (RISC), a very long instruction word (VLIW; VLIW) microprocessor, a graphics processor, a digital signal processor (DSP), a multi-core processor, a field-programmable gate array (FPGA), or any other type of processor or processing circuit. Other types of circuitry that may be included in the computer system may include a custom-built circuit, an application-specific integrated circuit (ASIC), or the like, such as one or more circuits (e.g., a communications circuit) for use in wireless devices such as cellular phones, tablet computers, laptop computers, two-way radios, and similar electronic systems. The computer system may include one or more storage devices, which may include one or more storage elements suitable for the particular application, such as main memory in the form of random access memory (RAM), one or more hard drives, and/or one or more drives that handle removable media, such as CDs, flash memory cards, DVDs, and the like. The computer system may also include a display device, one or more speakers, and a keyboard and/or controller, which may include a mouse, trackball, touch screen, voice recognition device, or any other device that allows a system user to input information to and receive information from the computer system.

Some or all of the method steps may be performed by (or using) a hardware device, such as may be a processor, a microprocessor, a programmable computer, or an electronic circuit. In some embodiments, one or more of the key method steps may be performed by such a device.

Depending on certain implementation requirements, embodiments of the invention may be implemented in hardware or software. The implementation may be performed using a non-volatile storage medium such as a digital storage medium, such as a floppy disk, a DVD, a Blu-Ray, a CD, a ROM, a PROM and EPROM, an EEPROM, or a FLASH memory, on which electronically readable control signals are stored that interact (or are capable of interacting) with a programmable computer system such that the respective process is performed. Therefore, the digital storage medium may be computer readable.

Some embodiments according to the invention include a data carrier having electronically readable control signals that can interact with a programmable computer system so as to perform any of the methods described herein.

In general, embodiments of the present invention may be implemented as a computer program product having program code, the program code being effective to perform any of the methods when the computer program product is running on a computer. For example, the program code may be stored on a machine-readable medium.

Further embodiments include the computer program for performing any of the methods described herein stored on a machine-readable medium.

In other words, an example embodiment of the present invention therefore includes a computer program having program code for performing any of the methods described herein when the computer program is running on a computer.

Thus, another embodiment of the present invention is a storage medium (or a digital storage medium or a computer-readable medium) comprising a computer program stored thereon for performing any of the methods described herein when executed by a processor. The data carrier, digital storage medium, or recorded medium is generally tangible and/or non-transitory. Another embodiment of the present invention is an apparatus as described herein comprising a processor and the storage medium.

Thus, another embodiment of the invention is a data stream or signal sequence representing the computer program for performing any of the methods described herein. For example, the data stream or signal sequence may be configured to be transmitted over a data communication link, such as over the Internet.

Another example embodiment comprises a processing means, for example, a computer or programmable logic device, configured or adapted to perform any of the methods described herein.

A further example embodiment comprises a computer having installed thereon the computer program for performing any of the methods described herein.

Another embodiment according to the invention comprises a device or system configured to transmit (for example, electronically or optically) a computer program for performing any of the methods described herein to a receiver. The receiver may be, for example, a computer, a mobile device, a storage device, or the like. The device or system may include, for example, a file server for transmitting the computer program to the receiver.

In some embodiments, a programmable logic device (e.g., a field programmable gate array, FPGA) may be used to perform some or all of the functionalities of the methods described herein. In some embodiments, a field programmable gate array may cooperate with a microprocessor to perform any of the procedures described herein. In general, the methods are preferably performed by any hardware device.

Embodiments may be based on using an artificial intelligence, particularly a machine learning model or machine learning algorithm. Machine learning may refer to algorithms and statistical models that computer systems can use to perform a particular task without using explicit instructions, rather than relying on models and inference. For example, machine learning may use, instead of a rulebased transformation of data, a transformation of data that can be inferred from an analysis of history and/or training data. For example, the content of images may be analyzed using a machine learning model or using a machine learning algorithm. In order for the machine learning model to analyze the content of an image, the machine learning model may be trained using training images as input and training content information as output. By training the machine learning model with a large number of training images and/or training sequences (e.g., words or sentences) and associated training content information (e.g., labels or annotations), the machine learning model "learns" to recognize the content of the images so that the content of images not included in the training data can be recognized using the machine learning model. The same principle can be used for other types of sensor data as well: By training a machine learning model using training sensor data and a desired output, the machine learning model "learns" a transformation between the sensor data and the output, which can be used to provide an output based on non-training sensor data provided to the machine learning model. The provided data (e.g., sensor data, metadata, and/or image data) may be preprocessed to obtain a feature vector that is used as input to the machine learning model.

Machine learning models can be trained using training input data. The above examples use a training method called supervised learning. In supervised learning, the machine learning model is trained using a plurality of training samples, where each sample may include a plurality of input data values and a plurality of desired output values, i.e., each training sample is associated with a desired output value. By specifying both training samples and desired output values, the machine learning model "learns" which output value to provide based on an input sample that is similar to the samples provided during training. In addition to supervised learning, semi-supervised learning can also be used. In Semi-Supervised Learning, some of the training samples lack a desired output value. Supervised learning can be based on a supervised learning algorithm (e.g., a classification algorithm, a regression algorithm, or a similarity learning algorithm). Classification algorithms can be used when the outputs are restricted to a limited set of values (categorical variables), i.e., the input is classified as one of the limited set of values. Regression algorithms can be used when the outputs exhibit some numerical value (within a range). Similarity learning algorithms can be similar to both classification and regression algorithms, but are based on learning from examples using a similarity function that measures how similar or related two objects are. In addition to supervised learning or semi-supervised learning, unsupervised learning can be used to train the machine learning model. In Unsupervised Learning, (only) input data may be provided and an Unsupervised Learning algorithm may be used to find structure in the input data (e.g., by grouping or clustering the input data, finding commonalities in the data). Clustering is the assignment of input data comprising a plurality of input values into subsets (clusters) such that input values within the same cluster are similar according to one or more (predefined) similarity criteria, while they are dissimilar to input values comprised in other clusters.

Reinforcement learning is a third group of machine learning algorithms. In other words, reinforcement learning can be used to train the machine learning model. In reinforcement learning, one or more software actors (called "software agents") are trained to take actions in an environment. Based on the actions taken, a reward is calculated. Reinforcement learning is based on training the one or more software agents to select actions such that the cumulative reward is increased, resulting in software agents that become better at the task they are given (as evidenced by increasing rewards).

Further, some techniques can be applied to some of the machine learning algorithms. For example, feature learning can be used. In other words, the machine learning model may be trained at least in part using feature learning, and/or the machine learning algorithm may include a feature learning component. Feature learning algorithms, called representation learning algorithms, may preserve the information in their input but transform it in such a way that it becomes useful, often as a pre-processing stage before performing classification or prediction. Feature learning can be based on principal component analysis or cluster analysis, for example.

In some examples, anomaly detection (i.e., outlier detection) may be used, which aims to provide identification of input values that raise suspicion because they differ significantly from the majority of input and training data. In other words, the machine learning model may be trained at least in part using anomaly detection, and/or the machine learning algorithm may include an anomaly detection component.

In some examples, the machine learning algorithm may use a decision tree as a predictive model. In other words, the machine learning model may be based on a decision tree. In a decision tree, observations about an item (e.g., a set of input values) can be represented by the branches of the decision tree, and an output value corresponding to the item can be represented by the leaves of the decision tree. Decision trees can support both discrete values and continuous values as output values. When discrete values are used, the decision tree can be called a classification tree; when continuous values are used, the decision tree can be called a regression tree.

Association rules are another technique that can be used in machine learning algorithms. In other words, the machine learning model can be based on one or more association rules. Association rules are created by identifying relationships between variables given large amounts of data. The machine learning algorithm may identify and/or use one or more ratio rules that represent knowledge that is inferred from the data. The rules may be used, for example, to store, manipulate, or apply the knowledge.

Machine learning algorithms are typically based on a machine learning model. In other words, the term "machine learning algorithm" may refer to a set of instructions that can be used to create, train, or use a machine learning model. The term "machine learning model" may refer to a data structure and/or set of rules representing the learned knowledge (e.g., based on training performed by the machine learning algorithm). In embodiments, the use of a machine learning algorithm may imply the use of an underlying machine learning model (or a plurality of underlying machine learning models). The use of a machine learning model may imply that the machine learning model and/or the data structure/set of rules that is/are the machine learning model is trained by a machine learning algorithm.

For example, the machine learning model may be an artificial neural network (ANN; artificial neural network). ANNs are systems inspired by biological neural networks, such as those found in a retina or brain. ANNs include a plurality of interconnected nodes and a plurality of connections, called edges, between nodes. There are typically three types of nodes, input nodes that receive input values, hidden nodes that are connected (only) to other nodes, and output nodes that provide output values. Each node can represent an artificial neuron. Each edge can send information, from one node to another. The output of a node can be defined as a (nonlinear) function of its inputs (e.g., the sum of its inputs). The inputs of a node may be used in the function based on a "weight" of the edge or node providing the input. The weight of nodes and/or of edges can be adjusted in the learning process. In other words, training an artificial neural network may include adjusting the weights of the nodes and/or edges of the artificial neural network, i.e., to achieve a desired output for a given input.

Alternatively, the machine learning model may be a support vector machine, a random forest model, or a gradient boosting model. Support Vector Machines (i.e., support vector networks) are supervised learning models with associated learning algorithms that can be used to analyze data (e.g., in a classification or regression analysis). Support Vector Machines can be trained by providing an input with a plurality of training input values belonging to one of two categories. The Support Vector Machine can be trained to assign a new input value to one of the two categories. Alternatively, the machine learning model may be a Bayesian network, which is a probabilistic directed acyclic graphical model. A Bayesian network may represent a set of random variables and their conditional dependencies using a directed acyclic graph. Alternatively, the machine learning model can be based on a genetic algorithm, which is a search algorithm and heuristic technique that mimics the process of natural selection.

## Claims

1. An image processing method (100), comprising the following steps:
obtaining a digital image (102) of at least a portion of a body of a person, wherein the digital image comprises at least one disturbed image portion; and
generating (104), based at least in part on the obtained digital image (102) and using a generative machine-learning model referred to as enhancement model, an enhanced digital image (106) of at least a portion of the body of the person in which the at least one disturbed image portion has been replaced by an artificially created image portion.

2. The method of claim 1, wherein the artificially created image portion, preferably each artificially created image portion, shows a portion of the body of the person which has no substantial health problems; and/or
wherein the enhancement model has been trained so that it only adds artificially created image portions which have no substantial health problems.

3. The method of claim 1 or 2, further comprising:
segmenting (108), using a segmentation machine-learning model referred to as segmentation model, the obtained digital image (102) to produce an indication of at least one undisturbed image portion (114) in the obtained digital image; and
comparing (116) the at least one undisturbed image portion in the obtained digital image (114) with at least one corresponding portion in the generated enhanced digital image (112) to produce a similarity score.

4. The method of any one of the preceding claims, further comprising:
displaying the obtained digital image (102) and the generated enhanced digital image (106) on an electronic display device if the similarity score reaches or exceeds the predetermined similarity threshold.

5. The method of claim 4, further comprising:
displaying a masked digital image on the electronic display device which indicates the at least one undisturbed image portion in the obtained digital image.

6. The method of any one of the preceding claims, wherein the method (100) is a dental image processing method, wherein the portion of the body of the person is an oral cavity of the person.

7. The method of any one of the preceding claims, wherein the at least one disturbed image portion is caused by vibration and/or the presence of a medical, care or body substance, such as water, fluid, toothpaste or saliva, and/or the presence of a medical, care or personal health device, such as a toothbrush.

8. The method of any one of the preceding claims, wherein the enhancement model comprises or is a convolutional neural network (CNN), a deep CNN, a generative adversarial network (GAN) and/or a StyleGAN; and/or
wherein the segmentation model comprises or is a CNN, a deep CNN, an image segmentation model and/or a U-Net; and/or
wherein the similarity score is produced by a comparison model which comprises or is a CNN, a deep CNN, a Siamese neural network and/or a deep Siamese neural network.

9. A method of training a machine-learning model, in particular a generative machine-learning model, for generating an enhanced digital image (104) of at least a portion of a body of a person, in particular for use in the method of any one of the claims 1-8, comprising:
providing a training dataset comprising a plurality of pairs of digital images, each pair comprising:
a first digital image of at least a portion of a body of a person, wherein the first digital image comprises at least one disturbed image portion; and
a second digital image of the at least a portion of the body of the person in which the at least one disturbed image portion is absent or diminished; and
training the machine-learning model using the training dataset.

10. The method of claim 9, wherein the training dataset comprises at least one synthetic digital image in which at least one artificially disturbed image portion has been added to a digital image of at least a portion of a body of a person;
wherein, optionally, at least one dental or gum problem, such as tartar, caries, plaque and/or receding gums, has been artificially added to at least one of the synthetic digital images.

11. The method of any one of the preceding claims 9-10, further comprising:
verifying the performance of the machine-learning model, particularly using a verification dataset which is distinct from the training dataset.

12. A computer program, or a computer-readable medium storing a computer program, the computer program comprising instructions which, when the program is executed on a computer and/or a computer network, cause the computer and/or the computer network to carry out the method of any one of claims 1-11.

13. A machine-learning model data structure embodying a machine-learning model, in particular a generative machine-learning model, for generating an enhanced digital image of at least a portion of a body of a person, trained using the method of any one of claims 9-11.

14. A training, verification, validation or test dataset for a machine-learning model, in particular for a generative machine-learning model, the dataset comprising a collection of first digital images as defined in claim 9 and/or second digital images as defined in claim 9 and/or synthetic digital image as defined in claim 10 and/or generated enhanced digital images as defined in claim 1 and/or masked digital images as defined in claim 5.

15. A data processing device or system comprising means for carrying out the method of any one of claims 1-11.
